(19) Europäisches Patentamt
European Patent Office
Office européen des brevets

(11) Veröffentlichungsnummer: **0 048 436**
**B1**

(12) # EUROPÄISCHE PATENTSCHRIFT

(45) Veröffentlichungstag der Patentschrift: **15.02.84**

(51) Int. Cl.³: **A 01 N 57/20**

(21) Anmeldenummer: **81107305.5**

(22) Anmeldetag: **16.09.81**

(54) **Herbizide Mittel.**

(30) Priorität: **20.09.80 DE 3035554**

(43) Veröffentlichungstag der Anmeldung: **31.03.82 Patentblatt 82/13**

(45) Bekanntmachung des Hinweises auf die Patenterteilung: **15.02.84 Patentblatt 84/7**

(84) Benannte Vertragsstaaten: **AT BE CH DE FR GB IT LI NL SE**

(56) Entgegenhaltungen: **US - A - 4 168 963**

(73) Patentinhaber: **HOECHST AKTIENGESELLSCHAFT, Postfach 80 03 20, D-6230 Frankfurt am Main 80 (DE)**

(72) Erfinder: **Albrecht, Konrad, Dr., Sodener Strasse 64, D-6233 Kelkheim (Taunus) (DE)**
Erfinder: **Langelüddeke, Peter, Dr., Nelkenweg 5, D-6238 Hofheim am Taunus (DE)**

**EP 0 048 436 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Herbizide Mittel

Aus der US-PS 4 168 963 ist bereits bekannt, dass Verbindungen der Formel I

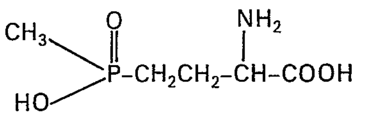

I

und ihre Derivate eine gute und breite Wirksamkeit gegen Unkräuter vieler botanischer Familien besitzen. Sie eignen sich deshalb zur nichtselektiven Bekämpfung von unerwünschtem Pflanzenwuchs, z.B. auf landwirtschaftlichen Kulturflächen, an Industrieanlagen und Eisenbahnanlagen, sowie zur Anwendung in Obstkulturen und im Weinbau.

Weiterhin ist bekannt, dass sich die Wirksamkeit von Herbiziden verbessern lässt (vgl. DE-OS 27 25 823 und 25 54 532). Besonders häufig werden zu diesem Zweck $C_{12}$–$C_{18}$-Fettalkoholpolyglycoläther oder Alkylphenolpolyglycoläther verwendet. Auch bei den Verbindungen der Formel I führt ein Zusatz derartiger oberflächenaktiver Mittel zu einer Wirkungssteigerung. Allerdings treten hierbei formulierungstechnische Probleme auf, die eine praktische Nutzbarmachung dieses erwünschten Effekts unmöglich machen:

Verbindungen der Formel I werden wegen ihrer Wasserlöslichkeit bevorzugt als wässrige Lösungen formuliert und angewendet. Mit sinkenden Temperaturen nimmt die Wasserlöslichkeit jedoch stark ab. Bereits bei Temperaturen um 0°C kristallisieren die Wirkstoffe aus wässriger Lösung aus. Damit entsprechen die Formulierungen nicht mehr den Stabilitätsvorschriften der CIPAC und WHO, die u.a. verlangen, dass Wirkstofflösungen auch bei Frosteinbruch noch gelagert, gehandhabt und angewendet werden können und zu diesem Zweck Stabilitätsprüfungen noch bei −10°C vorsehen.

Durch Zusatz von geringen Mengen polarer organischer Lösungsmittel wie Dioxan, Dimethylformamid (DMF), Dimethylsulfoxid (DMSO) oder Methylglycol kann die Löslichkeit zwar verbessert werden. Bei der Zugabe zahlreicher oberflächenaktiver Mittel, die üblicherweise in Pflanzenschutzmittel-Formulierungen verwendet werden, beispielsweise von Fettalkohol-polyglycoläthern wie Isotridecylalkohol-polyglycolether, Dodecylalkoholpolyglycolether und $C_{12}$–$C_{18}$-Alkohol-polyglycolether; ferner von z.B. Laurylsulfat-Natrium, Isodecylsulfobernsteinsäurehalbester als Natrium-Salz, Oleoyl-N-methylraurid-Natrium oder Laurylpolyglykolether-phosphat-Natrium zu wässrigen oder wässrig-organischen Lösungen von Verbindungen der Formel I bzw. deren Derivaten kommt es jedoch zu einer Phasentrennung in der Weise, dass das oberflächenaktive Zusatzmittel von dem Wirkstoff «ausgesalzen» wird. Dies führt zu Trübungen und festen bzw. flüssigen Abscheidungen. Die genannten oberflächenaktiven Mittel sind also, ungeachtet eventueller wirkungssteigernder Eigenschaften, für die Herstellung stabiler Formulierungen von Wirkstoffen der Formel I oder deren Derivaten prinzipiell nicht geeignet.

Eine andere Gruppe von oberflächenaktiven Mitteln – beispielsweise Alkylphenolpolyglykoläther, quaternäre Ammoniumsalze sowie Kondensationsprodukte von Fettaminen mit Äthylenoxid – werden zwar nicht ausgesalzen, müssen jedoch in erheblichen Mengen zugesetzt werden. Zur Erzielung einer nennenswerten Wirkungssteigerung benötigt man mindestens 2–3 Teile dieser Mittel bezogen auf 1 Teil Wirkstoff. Das hat zur Folge, dass der Wirkstoffgehalt in derartigen Formulierungen verhältnismässig gering ist. Man kann auf diese Weise flüssige kältestabile Wirkstoffkonzentrate mit einem Wirkstoffgehalt von maximal 10% nebst 20–30% des oberflächenaktiven Mittels erhalten. Von derartigen Konzentraten sind etwa 10 Liter pro Hektar erforderlich, um (in entsprechender wässriger Verdünnung) die gewünschte herbizide Wirkung zu erreichen. Dies steht im Widerspruch zu dem Bedürfnis, Wirkstoffkonzentrate mit möglichst hohem Wirkstoffanteil herzustellen, um Transportkosten und Verpackungsmaterial einzusparen.

An flüssige Formulierungen der Verbindungen der Formel I werden somit unter praktischen Gesichtspunkten die drei nachstehenden Forderungen gestellt:

1. Die Formulierungen müssen kältestabil sein.
2. Sie sollen einen möglichst hohen Wirkstoffanteil besitzen
3. Der Anteil an oberflächenaktivem Mittel soll möglichst gering sein, gleichzeitig aber die herbizide Wirkung verstärken.

Mit den herkömmlichen Mitteln lassen sich diese 3 Forderungen nicht miteinander vereinbaren. Überrraschend wurde jedoch gefunden, dass ein Zusatz von vergleichsweise geringen Mengen Kokosfettalkyl-benzyldimethylammoniumchlorid (Handelsname ®Dodigen) oder Alkali- bzw. Ammoniumsalzen von $C_{12}$–$C_{16}$-Alkohol-polyglycolethersulfaten (Handelsname ®Genapol LRO) die herbizide Wirksamkeit von (vergleichsweise) hochkonzentrierten wässrigen bzw. wässrig-organischen Lösungen von Verbindungen der Formel I bzw. deren Derivaten ganz erheblich verbessert, ohne die Kältestabilität zu beeinträchtigen.

Gegenstand der Erfindung sind somit herbizide Mittel, die gekennzeichnet sind durch einen Gehalt an einer Verbindung der Formel (I), deren Niederalkylestern bzw. Salzen mit Säuren oder Basen, in Kombination mit Kokosfettalkyl-benzyldimethylammoniumchlorid (II) oder einem Alkali- oder Ammoniumsalz eines $C_{12}$–$C_{16}$-Alkohol-polyglycolethersulfats (III).

Durch den Zusatz dieser Mittel lassen sich noch mit Wirkstoffanteilen von 30% stabile wässrige Formulierungen erhalten, die gegenüber zusatzmittelfreien Wirkstofflösungen eine gesteigerte herbizide Wirksamkeit besitzen.

Die genannten Zusatzstoffe haben weiterhin den Vorteil, dass sie fest oder halbfest sind und somit zu wasserlöslichen, lagerfähigen Pulver- oder Granulatformulierungen verarbeitet werden können, in denen der Wirkstoffgehalt bis zu 50% betragen kann. Die üblicherweise als Formulierungshilfsmittel verwendeten Äthylenoxidkondensate von Fettaminen, Alkylphenolen und Alkoholen sind demgegenüber in den Kondensationsgraden, in denen sie den Wirkstoffen eine verbesserte Wirkung verleihen, flüssig und daher in Pulverformulierungen nur nach vorheriger Adsorption auf hochadsorptionsfähige unlösliche Kieselsäuren einzuarbeiten. Bei der Anwendung solcher Formulierungen kann es zu Düsenverstopfungen bei den Spritzgeräten kommen.

Mit den beschriebenen, besonders wirksamen Zusatzmitteln dagegen kann man Pulverformulierungen und Granulate mit dem Wirkstoff herstellen, die wasserlöslich und daher bei der Anwendung völlig unproblematisch sind.

Die erfindungsgemässen Mittel enthalten in gelöster Form 10–30 Gewichtsprozent bzw. in fester Form 20–50 Gewichtsprozent eines Wirkstoffs (I) sowie 0.5–3 Teile eines der eingangs genannten Zusatzmittel (II) oder (III) pro Wirkstoffeinheit. Zusätzlich können weitere oberflächenaktive Mittel zur Verbesserung des Benetzungsvermögens, Haft- und Bindemittel sowie Entschäumer vorhanden sein. Lösungen enthalten neben Wasser eines der oben erwähnten polaren organischen Lösungsmittel mit Siedepunkten vorzugsweise $\geqq$ 100°C zur Verbesserung der Löslichkeit des Wirkstoffs.

Von den erfindungsgemäss verwendeten Zusatzmitteln sind die Alkali-bzw. Ammoniumsalze von ($C_{12}$–$C_{16}$)Alkohol-polyglycoläthersulfaten wegen ihrer guten Verträglichkeit für Warmblüter und ihrer geringen phytotoxischen Wirksamkeit besonders bevorzugt. Sie enthalten vorzugsweise 2–6 Ethylenoxid(AeO)-Einheiten und sind als solche vorwiegend als Badezusätze in Gebrauch. Im Pflanzenschutz wurden sie bisher nicht angewendet. Ihre Formel lautet:

$C_nH_{2n+1}O(CH_2CH_2O)_{2-6}$-$SO_3^-Na^+(K^+,NH_4^+)$
(n = 12–16)

Wässrige Lösungen, die diese Zusatzstoffe enthalten, können besonders hohe Wirkstoffanteile aufnehmen, ohne dass es in der Kälte zu Phasentrennung kommt.

Das ebenfalls gut geeignete Kokosfettalkylbenzyl-dimethyl-amoniumchlorid ist ein quaternäres Ammoniumsalz, desssen Kokosfettalkyl-Anteil aus Kokosfettsäuren erhalten wird. Bei diesen handelt es sich um ein Gemisch höherer gesättigter und ungesättigter Paraffinsäuren mit Kohlenstoffzahlen von (im wesentlichen) 10–18, u.a. von Caprin-, Laurin-, Myristin-, Palmitin-, Stearin- und Ölsäure.

Die erfindungsgemässen Mittel liegen als Lösungen, wasserlösliche Pulver, benetzbare Pulver oder Granulate vor und werden nach Verdünnen bzw. Auflösen in Wasser appliziert. Als Wirkstoffe kommen insbesondere folgende Verbindungen in Betracht, die in der US-PS 4 168 963 beschrieben sind oder entsprechend hergestellt werden können:

(3-Amino-3-carboxy-propyl)-methyl-phosphinsäure (Phosphinothricin; Formel I), dessen Hydrochlorid, Mononatrium-, Dinatrium-, Monokalium-, Dikalium, Monocalcium-, Ammonium-, $CH_3NH^+{}_3$–, $(CH_3)_2NH^+{}_2$–, $(CH_3)_3NH^+$–, –$(CH_3)_2NH^+CH_2CH_2OH$ oder–$CH_3NH^+{}_2CH_2CH_2$–OH–Salze oder dessen Methyl-, Ethyl-, Propyl- oder Butylester.

(Bei den Monosalzen und Estern der Verbindung der Formel I findet die Salz-Esterbildung jeweils an der Carboxylgruppe statt.)

Zur Herstellung der erfindungsgemässen Lösungen löst man den Wirkstoff in einem Gemisch aus einem Teil hochsiedendem (Sp = 100°C), wassermischbarem organischen Lösungsmittel und 1–2 Teilen Wasser und setzt die errechnete Menge des wirkungsverstärkenden oberflächenaktiven Mittels zu, ferner gegebenenfalls weitere übliche Hilfsmittel wie Entschäumer, weitere Netzmittel oder Farbstoffe.

Wasserlösliche Granulate erhält man, indem man wässrigen Wirkstofflösungen, die die erfindungsgemässen oberflächenaktiven Zusatzmittel enthalten, weiterhin wasserlösliche Binde- und Füllmittel zugibt und die erhaltenen Lösungen der Zerstäubungstrocknung unterwirft. Als Bindemittel eignen sich z.B. wasserlösliche, partiell verseifte Polyvinylacetate, Cellulosederivate, Alginate, Pflanzengummi und Ligninsulfonate. Als Füllstoffe kann man wasserlösliche pflanzenphysiologisch unbedenkliche anorganische Salze, Zukker oder Harnstoff einsetzen.

## Beispiele

### Beispiel 1

Herstellung eines 20%igen Wirkstoffpulvers
Man löst
20 Gew.-Teile Wirkstoff
30 Gew.-Teile ($C_{12}$–$C_{16}$) Alkohol-polyglykolether-sulfat-Na
50 Gew.-Teile Natriumsulfat in
250 Gew.-Teile Wasser unter Rühren
und trocknet diese Wirkstoff-Lösung zu einem Pulver unter Zerstäuben bei 5–10 ata mittels einer Einstoffdüse in einem Trockenturm wobei Trokkenluft von 130°C eingesetzt wird.

### Beispiel 2

Herstellung eines 50%igen Wirkstoffpulvers
Man löst
50 Gew.-Teile Wirkstoff und
50 Gew.-Teile ($C_{12}$–$C_{16}$–) Alkohol-polyglykolether-sulfat-Na in
250 Gew.-Teile Wasser
und trocknet die Wirkstoff-Lösung wie oben.

Beispiel 3

Herstellung eines 30%igen Wirkstoffgranulates

Man löst

30 Gew.-Teile Wirkstoff

30 Gew.-Teile ($C_{12}$–$C_{16}$) Alkohol-Polyglykolether-sulfat-Na

15 Gew.-Teile ligninsulfonsaures Natrium

5 Gew.-Teile partiell hydrolysiertes wasserlösliches Polyvinylacetat

20 Gew.-Teile Kaliumchlorid in

150 Gew.-Teile Wasser

und unterwirft diese durch Zusatz des partiell verseiften Polyvinylacetats viskose Lösung einer Zerstäubungstrocknung mittels einer Zerstäuberscheibe (Umfangsgeschwindigkeit der Scheibe 80–100 m/sec.) in einem Trockenturm bei Lufteintrittstemperaturen von 190°C und Austrittstemperaturen von 80°C. Man erhält wasserlösliche Wirkstoffgranulate in Durchmessern von 0,1 bis 0,4 mm, die 30 Gew.-% Wirkstoff enthalten.

Beispiel 3

Zusammensetzung und Stabilität verschiedener erfindungsgemässer Wirkstofformulierungen (Nr. 17-24) im Vergleich zu nicht beanspruchten Vergleichsformulierungen (Nr. 1–16).

Tabelle 1

| Formulierung Nr. | Wirkstoff % | Wasser % | % org. LM | % oberflächenaktives Mittel | Erscheinungsform nach 14 Tagen 20°C | −10°C | 0°C | Chem. Stabilität nach 3 Mon. 50°C |
|---|---|---|---|---|---|---|---|---|
| Vergleichsmittel: | | | | | | | | |
| 1 | 20 | 80 | – | – | klar | trüb | klar | stabil |
| 2 | 10 | 40 | 20 DMF | 30 $C_{13}$-$C_{18}$-Alkansulfonat-Natrium | Phasentrennung | | | – |
| 3 | 10 | 40 | 30 Dioxan | 20 Dodecylbenzolsulfonsaures Natrium | klar | Kristalle | | stabil |
| 4 | 10 | 40 | 30 Dioxan | 30 Isodecylalkoholpolyglykoläther (6 AeO) | Phasentrennung | | | – |
| 5 | 10 | 40 | 20 Dioxan | 30 Isodecylalkoholpolyglykoläther (8 AeO) | Phasentrennung | | | – |
| 6 | 10 | 40 | 20 Dioxan | 30 Dodecylschwefelsaures Natrium | Phasentrennung | | | – |
| 7 | 10 | 40 | 20 Dioxan | 30 Dodecylalkoholpolyglykoläther (10 AeO) | Phasentrennung und Kristalle | | | – |
| 8 | 10 | 40 | 20 Dioxan | 30 Laurylpolyglykolätherphosphat-Natrium | klar | trüb | klar | stabil |
| 9 | 10 | 50 | 20 DMF | 20 Isodecylsulfobernsteinsäurehalbester-Natrium | klar | wenig Kristalle | klar | stabil |
| 10 | 20 | 40 | 20 Dioxan | 20 Rizinusöloxäthylat (40 AeO) | trüb | trüb | trüb | stabil |
| 11 | 20 | 40 | 20 DMF | 20 Stearinsäurepolyglykolester (20 AeO) | klar | Kristalle | trüb | stabil |
| 12 | 20 | 30 | 20 Dioxan | 20 Triisobutylphenolpolyglykoläther (13 AeO) | klar | trüb | klar | stabil |
| 13 | 10 | 40 | 20 DMF | 10 Nonylphenolpolyglykoläther (10 AeO) | klar | klar | klar | stabil |
| 14 | 10 | 30 | 20 DMF | 20 Nonylphenolpolyglykoläther (10 AeO) | klar | Kristalle | klar | stabil |
| 15 | 10 | 60 | 20 DMF | 10 Nonylphenolpolyglykoläther (4 AeO) | klar | trüb | trüb | stabil |
| 16 | 10 | 60 | 20 DMF | 10 Nonylphenolpolyglykoläther (23 AeO) | klar | trüb | klar | stabil |
| Erfindungsgemässe Mittel: | | | | | | | | |
| 17 | 10 | 50 | 30 DMF | 10 Kokosfettalkyl-benzyl-dimethyl-ammoniumchlorid | klar | klar | klar | stabil |
| 18 | 10 | 30 | 30 DMF | 30 Kokosfettalkyl-benzyl-dimethyl-ammoniumchlorid | klar | klar | klar | stabil |
| 19 | 10 | 40 | 20 DMF | 20 Kokosfettalkyl-benzyl-dimethyl-ammoniumchlorid 10 Nonylphenolpolyglykoläther (10 AeO) | klar | klar | klar | stabil |
| 20 | 10 | 60 | 20 DMF | 6 Kokosfettalkyl-benzyl-dimethyl-ammoniumchlorid 4 Nonylphenolpolyglykoläther (10 AeO) | klar | klar | klar | stabil |
| 21 | 20 | 40 | 20 DMF | 20 $C_{12}$-$C_{16}$-Alkoholpolyglykoläthersulfat-Natrium | klar | viskos | klar | stabil |
| 22 | 20 | 40 | 20 Methylglykol | 20 $C_{12}$-$C_{16}$-Alkoholpolyglykoläthersulfat-Natrium | klar | klar | klar | stabil |
| 23 | 10 | 50 | 30 Methylpyrrolidon | 10 Kokosfettalkyl-benzyl-dimethyl-ammoniumchlorid | klar | klar | klar | stabil |
| 24 | 10 | 50 | 30 Dioxan | 10 Kokosfettalkyl-benzyl-dimethyl-ammoniumchlorid | klar | klar | klar | stabil |

Erläuterungen: DMF = Dimethylformamid    Anzahl AeO = Anzahl der Mole Äthylenoxid im Polyglykolätherrest

Die erfindungsgemässen Mittel lassen sich in grossem Umfang zur Bekämpfung von mono- und dikotylen Unkräutern verwenden. Im Verlauf zahlreicher Gewächshaus- und Feldversuche zeigte sich, dass die an sich gute Wirkung von wässrigen Wirkstofflösungen erheblich verbessert werden kann bzw. erfindungsgemäss dieselben Effekte mit erheblich geringeren Wirkstoff-Dosierungen erzielt werden können, wenn stattdessen die erfindungsgemässen Wirkstoff-Formulierungen verwendet werden. Insbesondere kann eine Reihe sonst schwer bekämpfbarer perennierender Schadgräser wie Quecke (Agropyron repens), Bermudagras (Cynodon dactylon), ausdauernde Cyperaceen sowie mehrjährige Dikotyle mit den erfindungsgemässen Mitteln viel besser bekämpft werden als mit den bekannten Formulierungen der Wirkstoffe.

Die Aufwandmenge an erfindungsgemässen Mitteln kann sich innerhalb weiter Grenzen bewegen und beträgt im allgemeinen entsprechend zwischen 0,1 und 10 kg/ha Wirkstoff, vorzugsweise 0,3 bis 5 kg/ha, insbesondere 0,5 bis 3 kg/ha Wirkstoff.

Die in den folgenden Beispielen angeführten Gewächshaus-Versuche wurden nach einem einheitlichen Schema angelegt: Samen der Testpflanzen wurden in Töpfen zum Keimen und Auflaufen gebracht; nachdem die Pflanzen 2 echte Blätter entwickelt hatten, wurden sie mit wässrigen Verdünnungen der erfindungsgemässen sowie der Vergleichspräparate besprüht, wobei die Spritzmenge umgerechnet 300 l/ha betrug. Einige Tage nach der Behandlung wurde die Wirkung durch eine visuelle Bonitur ermittelt und in % Schädigung ausgedrückt. Die angegebenen Werte sind Mittelwerte aus jeweils 3 gleichen Behandlungen. Um einen besseren Vergleichsmassstab zu haben, wurden die ermittelten Werte einer Dosierungsreihe graphisch nach dem Probit-Verfahren ausgewertet, wobei als Massstab die Dosierung ermittelt wurde, die nötig ist, um eine Wirkung von 95% zu erzielen (D 95). Dieser Wert ist in allen Tabellen zusätzlich angegeben.

Die Präparate-Nummern beziehen sich auf Tabelle 1.

Beispiel 1

In einem Versuch an Ackersenf wurden verschiedenen Präparate geprüft. Hierbei wurde gefunden, dass das erfindungsgemässe Präparat 22 die Vergleichspräparate 15, 16, 10, 11 und 12 in der Wirkung eindeutig übertraf.

Tabelle 2
Gewächshaus-Versuch an Sinapsis arvenis (Ackersenf)
Wirkung 14 Tage nach Behandlung

| | Dosierungen in kg Wirkstoff/ha<br>Wirkung in % | | | | | D 95 |
|---|---|---|---|---|---|---|
| | 0,25 | 0,125 | 0,062 | 0,031 | 0,015 | |
| Vergleich: | | | | | | |
| Präparat 1 | 96 | 89 | 75 | 50 | 30 | 0,2 |
| Präparat 15 | 99 | 94 | 85 | 65 | 45 | 0,125 |
| Präparat 16 | 98 | 93 | 80 | 65 | 40 | 0,15 |
| Präparat 10 | 98 | 92 | 83 | 65 | 40 | 0,15 |
| Präparat 11 | 97 | 92 | 75 | 50 | 25 | 0,16 |
| Präparat 12 | 98 | 94 | 85 | 68 | 45 | 0,13 |
| erfindungsgemäss | | | | | | |
| Präparat 22 | 100 | 98 | 98 | 93 | 80 | 0,075 |

Beispiel 2

In einem weiteren Gewächshaus-Versuch an Hafer zeigte sich, dass die erfindungsgemässen Präparate 22, 19, 20, 18 und 17 ebenfalls deutlich stärker wirkten und deutlich geringere Aufwandmengen erforderten als die Vergleichsprodukte 1, 8, 13 und 14, wobei das Präparat 22 an der Spitze lag.

Tabelle 3
Gewächshausversuch an Avena sativa (Hafer)

| | Dosierungen in kg/ha a.i.<br>Wirkung in % | | | D 95 |
|---|---|---|---|---|
| | 0,5 | 0,25 | 0,125 | |
| Vergleich: | | | | |
| Präparat 1 | 50 | 20 | 10 | 2,6 |
| Präparat 8 | 65 | 45 | 20 | 2,0 |
| Präparat 14 | 80 | 65 | 20 | 0,9 |
| Präparat 13 | 75 | 55 | 20 | 1,1 |

Tabelle 3 (Fortsetzung)
Gewächshausversuch an Avena sativa (Hafer)

| | Dosierungen in kg/ha a.i. Wirkung in % | | | D 95 |
|---|---|---|---|---|
| | 0,5 | 0,25 | 0,125 | |
| erfindungsgemäss | | | | |
| Präparat 22 | 96 | 80 | 55 | 0,45 |
| Präparat 19 | 93 | 75 | 40 | 0,6 |
| Präparat 20 | 85 | 60 | 25 | 0,7 |
| Präparat 18 | 93 | 70 | 45 | 0,65 |
| Präparat 17 | 91 | 57 | 25 | 0,75 |

Beispiel 3

In einem weiteren ergänzenden Versuch an Hafer wurde das erfindungsgemässe Präparat 19 mit dem Präparat 9 verglichen und gefunden, dass seine Wirkung erheblich besser war.

Tabelle 4
Gewächshausversuch an Avena sativa (Hafer)
Wirkung 14 Tage nach Behandlung

| | Dosierungen in kg/ha a.i. Wirkung in % | | | | D 95 |
|---|---|---|---|---|---|
| | 1,0 | 0,5 | 0,25 | 0,125 | |
| Präparat 19 | 100 | 95 | 73 | 35 | 0,5 |
| Präparat 9 | 96 | 75 | 38 | 10 | 0,9 |

Beispiel 4

In einer Serie von Feldversuchen unter verschiedenen Standortbedingungen wurden die erfindungsgemässen Präparate 19 und 22 mit dem Vergleichspräparat 1 verglichen; hierbei wurde gefunden, dass unter allen Bedingungen die Präparate 19 und 22 dem Vergleichsprodukt deutlich überlegen waren, die erforderlichen Wirkstoff-Dosierungen lagen z.B. um mehr als 50% unter denen, die für das Präparat 1 notwendig waren.

Tabelle 5
Feldversuche an verschiedenen Pflanzenarten
Wirkung 2 Wochen nach Behandlung

| | Dosierungen in kg/ha a.i. Wirkung in % | | | D 95 |
|---|---|---|---|---|
| | 1,2 | 0,6 | 0,3 | |
| 1. Amaranthus hybridus | | | | |
| Präparat 1 | 85 | 75 | 40 | 2,0 |
| Präparat 19 | 98 | 85 | 65 | 0,9 |
| Präparat 22 | 99 | 95 | 78 | 0,6 |
| 2. Datura stramonium | | | | |
| Präparat 1 | 99 | 95 | 80 | 0,6 |
| Präparat 19 | 100 | 98 | 88 | 0,45 |
| Präparat 22 | 99 | 98 | 95 | 0,3 |
| 3. Oryza sativa (Reis-Aufwuchs) | | | | |
| Präparat 1 | 95 | 75 | 35 | 1,2 |
| Präparat 19 | 97 | 80 | 47 | 0,9 |
| Präparat 22 | 98 | 91 | 67 | 0,8 |
| 4. Cynodon dactylon | | | | |
| Präparat 1 | 60 | 15 | 0 | 2,5 |
| Präparat 19 | 80 | 50 | 10 | 1,9 |
| Präparat 22 | 98 | 70 | 25 | 1,0 |

Tabelle 5 (Fortsetzung)
Feldversuche an verschiedenen Pflanzenarten
Wirkung 2 Wochen nach Behandlung

| | Dosierungen in kg/ha a.i. Wirkung in % | | | D 95 |
|---|---|---|---|---|
| | 1,2 | 0,6 | 0,3 | |
| 5. Convolvulus arvensis | | | | |
| Präparat 1 | 88 | 65 | 35 | 1,8 |
| Präparat 19 | 92 | 82 | 55 | 1,3 |
| Präparat 22 | 95 | 83 | 60 | 1,2 |

Literatur:
Bliss, J.C.: The method of probits. Science 79, 1934, 38–39

**Patentansprüche**

1. Herbizide Mittel, gekennzeichnet durch einen Gehalt an einer Verbindung der Formel

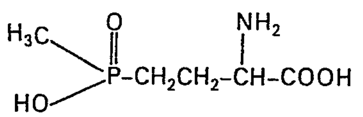 I

ihren Niederalkylestern oder Salzen mit Säuren oder Basen (I), in Kombination mit Kokosfettalkyl-benzyl-dimethylammoniumchlorid (II) oder einem Alkali- oder Ammoniumsalz eines $C_{12}$–$C_{16}$-Alkohol-polyglycolether-sulfats (III).

2. Herbizide Mittel gemäss Anspruch 1 in gelöster Form, dadurch gekennzeichnet, dass sie 10–30 Gew.-% einer Verbindung (I) und 0.5 bis 3 Teile (II) oder (III) pro Teil (I) sowie gegebenenfalls 15–35 Gew.-% eines wassermischbaren polaren organischen Lösungsmittels in wässriger Lösung enthalten.

3. Herbizide Mittel gemäss Anspruch 1, in fester Form, dadurch gekennzeichnet, dass sie 20–50 Gew.-% einer Verbindung (I) sowie 0.5 bis 3 Teile (II) oder (III) pro Teil (I) nebst wasserlöslichen Binde- und Füllmitteln enthalten.

4. Herbizide Mittel gemäss Anspruch 2 und 3, dadurch gekennzeichnet, dass sie weitere oberflächenaktive Mittel in Anteilen von 4 bis 15 Gew.-% enthalten.

5. Verwendung der Mittel gemäss Ansprüchen 1 bis 4 zur Bekämpfung von Schadpflanzen.

6. Verfahren zur Bekämpfung von Unkräutern, dadurch gekennzeichnet, dass man auf die von ihnen befallenen Flächen herbizide Mittel gemäss Ansprüchen 1 bis 4 in Mengen entsprechend 0,1 bis 10 kg/ha Wirkstoff aufbringt.

**Revendications**

1. Produits herbicides caractérisées en ce qu'ils contiennent:

I) un composé répondant à la formule :

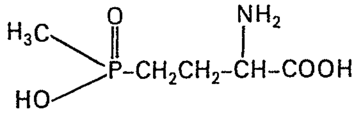 I

ou l'un de ses esters alkyliques inférieurs ou l'un des sels qu'il forme avec un acide ou avec une base, en association avec:

II un chlorure d'alkyl-benzyl-diméthylammonium dont l'alkyle provient du coco, ou avec:

III un sel de métal alcalin ou un sel d'ammonium d'un sulfate d'éther polyglycolique d'alcool en $C_{12}$–$C_{16}$.

2. Produits herbicides selon la revendication 1 à l'état dissous, caractérisés en ce qu'ils contiennent, en solution aqueuse, de 10 à 30% en poids d'un composé (I) et de 0,5 à 3 parties de (II) ou de (III) par partie de (I) ainsi qu'éventuellement de 15 à 35% en poids d'un solvant organique polaire miscible à l'eau.

3. Produits herbicides selon la revendication 1 à l'état solide, caractérisés en ce qu'ils contiennent de 20 à 50% en poids d'un composé (I) ainsi que de 0,5 à 3 parties de (II) ou de (III) par partie de (I) avec, en plus, des liants et charges solubles dans l'eau.

4. Produits herbicides selon l'une des revendications 2 et 3, caractérisés en ce qu'ils contiennent d'autres agents surfactifs en des proportions de 4 à 15% en poids.

5. Application des produits selon l'une quelconque des revendications 1 à 4 à la lutte contre des plantes nuisibles.

6. Procédé pour combattre des plantes adventices, procédé caractérisé en ce qu'on applique, sur les surfaces atteintes par de telles plantes, des produits herbicides selon l'une quelconque des revendications 1 à 4 en des quantités correspondant à des doses de matière active comprises entre 0,1 et 10 kg/ha.

**Claims**

1. Herbicidal agents containing a compound of the formula

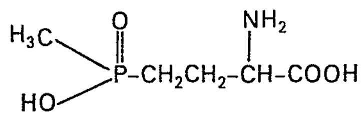 I

its lower alkyl esters or salts with acids or bases (I), in combination with coconut fatty alkyl-ben-

zyldimethyl-ammonium chloride (II) or an alkali metal salt or ammonium salt of a $C_{12}$–$C_{16}$ alcohol polyglycol ether sulfate (III).

2. Herbicidal agents as claimed in claim 1, in a dissolved form, containing 10 to 30% by weight of a compound (I) and 0.5 to 3 parts of (II) or (III) per part of (I) and, if appropriate, 15 to 35% by weight of a water-miscible polar organic solvent in aqueous solution.

3. Herbicidal agents as claimed in claim 1, in a solid form, containing 20 to 50% by weight of a compound (I) and 0.5 to 3 parts of (II) or (III) per part of (I) and in addition, water-soluble binding-agents and fillers.

4. Herbicidal agents as claimed in anyone of claims 2 and 3, containing further surface-active agents in proportions of from 4 to 15% by weight.

5. Use of the agents as claimed in any one of claims 1 to 4 for combating weeds.

6. A process for combating weeds which comprises applying a herbicidal agent as claimed in any one of claims 1 to 4, in quantities corresponding to 0.1 to 10 kg/ha of active ingredient, to the areas affected by the weeds.